Europäisches Patentamt

**European Patent Office**

**Office européen des brevets**

(11) Publication number: **0 178 326**
A1

# EUROPEAN PATENT APPLICATION

published in accordance with Art. 158(3) EPC

(21) Application number: 84903981.3

(22) Date of filing: 25.10.84

Data of the international application taken as a basis:

(86) International application number:
PCT/JP84/00511

(87) International publication number:
WO85/01886 (09.05.85 85/11)

(51) Int. Cl.⁴: **B 01 D 53/26**
**B 65 D 90/00**

(30) Priority: 25.10.83 JP 199435/83
17.05.84 JP 99461/84

(43) Date of publication of application:
23.04.86 Bulletin 86/17

(84) Designated Contracting States:
AT BE CH DE FR GB LI LU NL SE

(71) Applicant: SANYO SANGYO CO. LTD.
11, Hirano-chi Himegi-shi
Hyogo 670(JP)

(72) Inventor: SHIMIZU, Kou
21-3, Ishikawa-cho, 1 chome
Oota-ku Tokyo 145(JP)

(74) Representative: Haigh, Charles Roy et al,
J.A. KEMP & CO. 14 South Square Gray's Inn
London WC1R 5EU(GB)

(54) **DEHUMIDIFYING APPARATUS FOR CONTAINER.**

(57) An apparatus for dehumidifying air comprises: a battery; a dehumifier filled with a dehumidifying agent; a fan for delivering air to the dehumidifier; and a humidity sensor for driving the fan in such a manner that a predetermined humidity is obtained. When the humidity in a container has risen above the predetermined humidity, the dehumidifying operation is started by driving the dehumidifying apparatus, which is automatically suspended after a satisfactory result has been obtained by the dehumidifying operation.

Fig. 1

SPECIFICATION

## DEHUMIDIFIER FOR CONTAINERS

### FIELD OF THE INVENTION

This invention relates to a dehumidifier for use in a container loaded on a ship, freight car or trailer.

### BACKGROUND OF THE INVENTION

Goods transported by a ship, freight train or trailer have been for the most part shipped packed in containers for many years. The control of humidity in the container has been a great problem in the transporation of containers, particularly in ocean transport which takes many days.

To maintain the quality of goods in transit, it is desired to keep the humidity in the containers at levels adequate for individual goods contained, thereby preventing dew condensation. There have oftenbeen cases, especially in a rainy season, in which metals become oxidized, making machines defective.

Therefore, cargon ships have been equipped with a large dehumidifier for removing humidity from the air in the container. This large dehumidifier is installed near the engine which serves as a power source. Dry air is supplied from the dehumidifier through a long duct to each container to adjust the humidity in it.

-2-

The problems with the dehumidifiers used in applications such as this are that they are complicated in structure and large in size and take a large amount of installation cost and much space.

This conventional method of dehumidification of the container carried on board a ship employs a single unit of large dehumidifier and uses a long duct to supply dry air into the containers for humidity adjustment. The adjustment control of humidity in a large number of containers require lots of manpower and working hours and0as a result, the efficiency has beenunsatisfactory.


DISCLOSURE OF THE INVENTION

The dehumidifier for containers of this invention has been devised to solve the problems mentioned above. It is accordingly an object of this invention to solve these problems by providing a dehumidifier which consists of a small dehumidifier, a blower to send air from the container to the dehumidifier and a humidity sensor used to drive the blower when a prescribed humidity is reached and which is to be installed in each container.

Another object of this invention is to provide a dehumidifier, equipped with a heater to remove humidity from the desiccant filled in the dehumidifier, which makes the desiccant semi-permanently usable.

A still further object of this invention is to provide a dehumidifier furnished with shield members which can prevent a backward current of air in the desiccator and accordingly improve the efficiency of the desiccant and also to provide a dehumidifier whose atmospheric air shield members for backward current prevention are readily detachable.

As a general rule, when the suction port and the discharge port of the dehumidifier are usually opened, even if the blower is stationary and the dehumidifier has been switched off, the humidity coming from the inside walls of the container and damp atmospheric air enters through the suction port and the discharge port and is absorbed by the desiccant filled in the desiccator.

In other words, it can be said that dehumidification is constantly performed to some extent even when there is no need to dehumidify the air. This results in the deteriorated efficiency and the reduced life of the desiccant.

BRIEF DESCRIPTION OF THE DRAWINGS

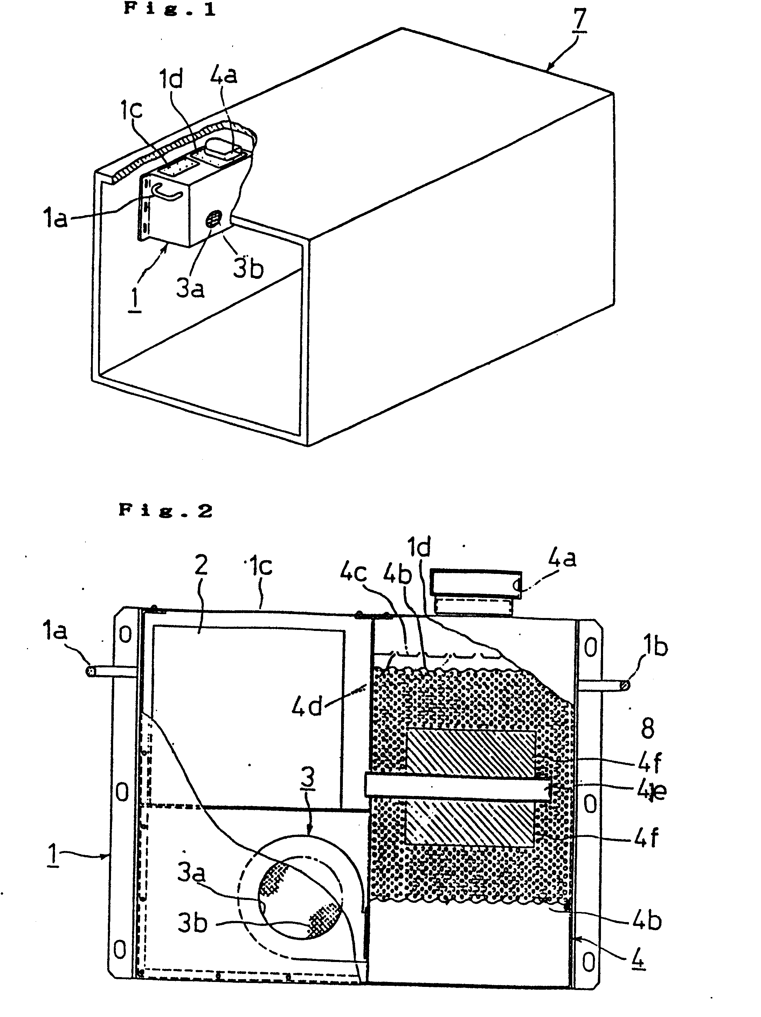

Fig. 1 is a perspective view of the dehumidifier arranged in a container.

Fig. 2 is a front view of the dehumidifier with a part broken away.

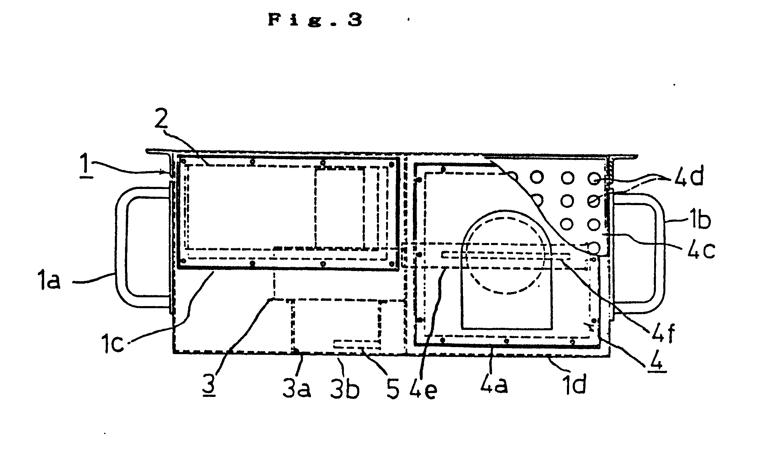

Fig. 3 is a plan view of the dehumidifier with a part broken away.

Fig. 4 and 5 illustrate the first embodiment of this invention, which uses shield-type suction port member and discharge port member.

Fig. 6 and 7 illustrate the first embodiment of dehumidifier of this invention, which uses a shield-type suction port member and a discharge port member.

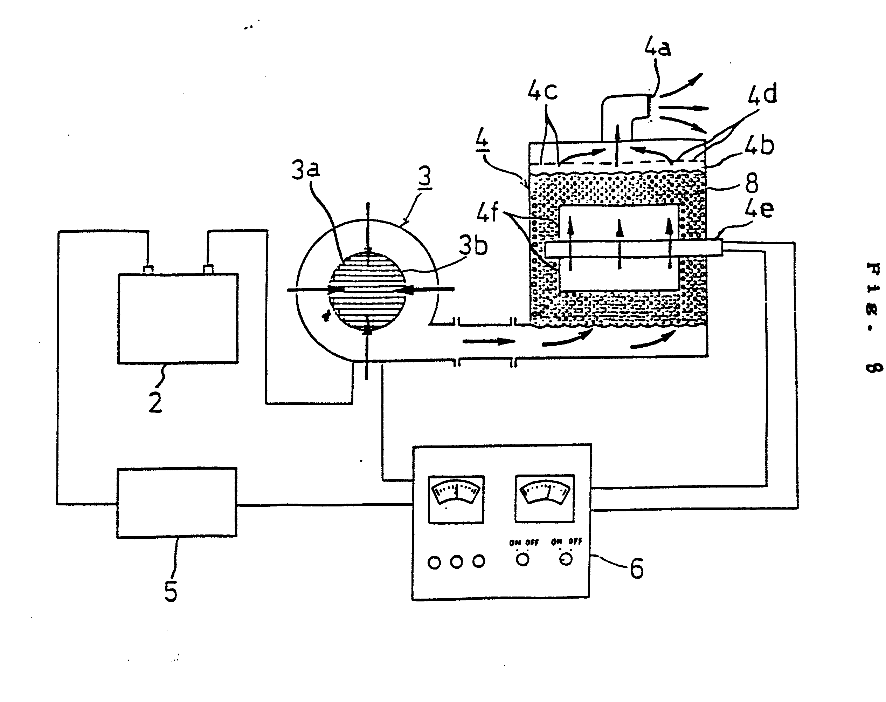

Fig. 8 is an electric circuit diagram of the dehumidifier of this invention.


THE BEST MODE OF EMBODIMENT OF THIS INVENTION

Referring to the drawings, the dehumidifier for containers of this invention is described in greater detail in the following.

The dehumidifier 1, used to dehumidify the air, is composed of a battery 2, a blower 3, a desiccator 4, a humidity sensor 5 and a centralized control panel 6.

The dehumidifier 1, installed in a container 7, is a compact type of dehumidifier to maintain the humidity in the container 7 at a level adequate for the goods which are transported.

To be more speciic, the dehumidifier is of a box shape, is provided with carrying handles 1a and 1b on both sides of it and is also attached with a lid 1c of the battery 2, mounted to the underside of the top panel, and a lid 1d of the desiccant 8.

The blower 3, provided with a motor and used to draw in air from a container through the suction port and send the air into the desiccator 4, is installed in the dehumidifier.

Provided near the suction port 3a of the blower 3 are a filter cloth or net 3b to filter dust and the humidity sensor 5.

The desiccator 4, while letting air containing the humidity of a container pass through the desiccant 8 filled in the desiccator 4, absorbs the humidity and removes it from the air.

The discharge port 4 is used to discharge or bring back the air which has been made dry by the desiccator 4 into the container. The discharge port 4 can change its position through 360°.

The net 4b by which the desiccant 8 is filled consists of granular SECADO (a trade name - as phonetically translated) or inactive ALNAGEL (a trade name - sa phonetically translated) and is detachable.

The heater 4e serves to make the desiccant 8, which absorbs the humidity of the air, permenently usable. The heater 4e is provided with a fin 4f to facilitate the dehumdification of the desiccant 8 and better radiates the heat.

The centralized control panel controls the humidity in a container 7 to be at an adequate level for the goods which are transported. The control panel is used to turn the heater 4e on and off.

If a certain level of humidity is preset, when the humidity in a container 7 rises to the preset level, the centralized control panel 6 detects it with the humidity sensor 5 and drives the blower 3 to decrease the humidity.

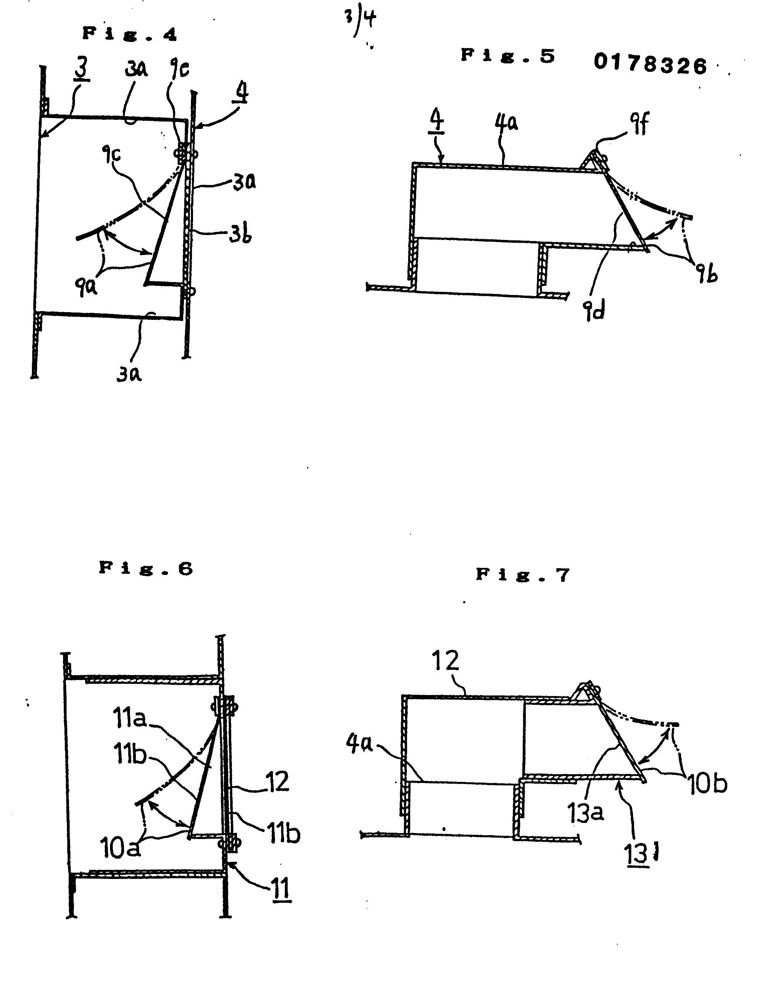

Referring to Figs. 4 to 7, the examples of the atmospheric air shield are described in the following.

In the examples in Figs. 4 and 5, when the blower 3 is driven, the atmospheric air around the desiccator 4 is drawn in through the suction port 3a. The drawn-in air is filtered by the net 3b provided at the suction port 3a to separate dust. The air then pushes open the atmospheric air shield member 9a and is drawn into the desiccator 4.

The dehumiditied air pushes open the atmospheric air shield member 9b and is discharged from the discharge port 4a.

When the blower 3 is stopped, the movement of air in the desiccator 4 stops.

The atmospheric air shield member 9a or 9b, which has been bent pushed by the air drawn into the desiccator 4, stops receiving the pressure of air and contacts the sloped part 9c or 9d, thus closing the suction port 3a or the discharge port 4.

Two pieces of plate 9e and 9f are screwed down to secure the air shield members.

Therefore, the atmospheric air shields tightly contact the sloped parts by their own weight. As a result, the entry of the atmospheric air through the discharge port into the desiccator can be prevented and even the entry of a gentle breeze of some intensity can be prevented.

Description is next made of the examples of the atmospheric air shield shown in Figs. 6 and 7.

The shield type suction port member 11 is almost in a cylindrical form and is attached on its outside with a net to filter dust.

The sloped part 11a is mounted inside the suction port member 11 and has the thin-film atmospheric air shield 10a fixed to it.

The opening part 11b of the shield type suction port member is of a square shape and is attached on its outside with a net 12 and on its inside with an atmospheric air shield member 10a.

The atmospheric air shield 10a is fixed to the upper portion of the inside of the opening part 11b.

The shield type suction port member 11 can be inserted into and removed from the suction port of the desiccator.

Therefore, the atmospheric air shield 10a can be fitted when necessary.

Fig. 7 shows a sectional view of the discharge port 4a which is attached with a $360^{\circ}$-rotatable intermediate member 12 having a detachable shield type suction port member 13 fitted with an atmospheric shield member 10a.

The intermediate member 12 is cylindrical at its bottom end engaging with the discharge port 4a so as to be able to rotate thereat and is square at the other end engaging with the shield type suction port member 13. In the shield type suction port member 13, a sloped part 13a at the opening of the member 13 is attached with an atmospheric shield member 10b in a thin film.

The shield type suction port member 13 provided with the atmospheric air shield member 10b which prevent the atmospheric air from entering into the desiccator 4 can be attached to and detached from the intermediate member 12.

Therefore, the member 13 can be attached to theintermediate member 12 only when it is necessary.

The use of the intermediate member 12 mounted to the discharge port 4a enables the discharging direction of the dehumidified air to be charged freely through 360°. The construction of a dehumidifier for containers of this invention has been described.

Next, the the connections of the electric circuit are described in detail in the following. The blower 3 is connected between a battery 2 and the centralized control panel 6. The heater 4e is connected to the centralized control panel 6. The humidity sensor 5 is connected between the battery 2 and the centralized control panel 6. The function of a dehumidifier of this invention is described in detail as follows.

First, install a dehumidifier 1 in a container. The dehumidifier 1 is compact and is attached with handles 1a and 1b, which are convenient for transportation.

Then, set an optimal humidity for the goods in the container at the member of the centralized control panel 6. For example, the optimal humidity is said to be 45 to 50% for automobile parts, machine parts and metals and about 80% for cereals.

When the humidity rises in a container to a preset value, 50% for example, the humidity sensor 5 detects it and the blower 3 is rotated. The air in the container is sent from the suction port 3a through the blower 3 into the desiccator 4. The humid air, as it passes through a desiccant 8, is deprived of humidity by the desiccant 8, becomes dry, and is sent back through a porous partition wall 4c and the discharge port 4a to the container 7.

In this way, the air in the container is circulated and dried to an adequate humidity. When the lower limit humidity set at the centralized control panel 6, 45% for example, is reached, the blower 3 is stopped. Specifically, humidity control and dehumiditication can be performed without human intervention and the qaulity of goods can be preserved.

The humidity sensor 5 is installed inside the filter cloth or net 3b at the suction port 3a located in a position remotely different from the discharge port. Therefore, the humidity sensor 5 is capable of measuring an average humidity in the container 7 and is protected from dust, external forces, etc.

-10-

When the heater 4e is switched on, the desiccant 8 is heated to cause the humidity absorbed by the desiccant 8 to evaporate, making it possible to use the desiccant 8 semi-permanently. The two, upper and lower, fins of the heater 4e offer a better radiation effect, facilitating the evaporation of the humidity absorbed by the desiccant 8.

Since the discharge port 4a is provided above the desiccator 4, it can discharge an evaporating humidity smoothly outside desiccator 4.


INDUSTRIAL APPLICABILITY

Having the construction and the function as mentioned above,the dehumidifier for containers of this invention offers the following effects.

Firstly, the installation of compact-size dehumidifier incorporating a humidity sensor in a container enables the humidity in the container to be constantly maintained at a level adequate for goods which are transported.

The dehumidification in a container can be performed automatically without the need for manpower, and dew condensation can thus be prevented. As a result, the quality of goods can be maintained in transit. Compact in size and attached with handles, the dehumidifier is convenient for transferring to other places.

Secondly, in addition to the effects mentioned above, it is possible to provide a dehumidifier which, by the use of a finned heater in the desiccant, can evaporate the absorbed humidity efficiently and enables the desiccant to be used semi-permanently.

Thirdly, the installation of the atmospheric air shield prevents dehumidification from being performed when there is no necessity for doing so. The suction port member and the discharge port member both of the shield type are capable of being mounted, when necessary, to the suction port and the discharge port. This opens the way to more efficient dehumidification than ever before.

What is claimed is:

1. A dehumidifier which removes humidity from the air and is to be used in a container, characterized by

   a battery;

   a desiccator filled with desiccant;

   a blower for sending air into said desiccator; and

   a humidity sensor for detecting the humidity in the air and for driving said blower to adjust the humidity to a preset level.

2. A dehumidifier which removes humidity from the air and is to be used in a container, characterized by

   a battery;

   a desiccator filled with desiccant;

   a heater for driving the desiccant which absorbs
     humidity;

   a blower for sending air into said desiccator; and

   a humidity sensor for detecting the humidity in the air and for driving said blower to adjust the humidity to a preset level.

3. A dehumidifier for use in a container covered by Claim 1 or Claim 2 above which is characterised by the installation of atmospheric air shield members for prevention of air backward current near the suction port and the discharge port of the desiccator.

4.  A dehumidifier for use in a container covered by Claim 3 which is characterised by the detachable shield type suction port member and the shield type discharge member which are used for the suction port and the discharge port of the desiccator.

1/4

0178326

Fig.1

Fig.2

Fig. 3

Fig.4

Fig.5    0178326

Fig.6

Fig.7

Fig. 8

# INTERNATIONAL SEARCH REPORT

0178326

International Application No. PCT/JP84/00511

## I. CLASSIFICATION OF SUBJECT MATTER (if several classification symbols apply, indicate all) [3]

According to International Patent Classification (IPC) or to both National Classification and IPC

Int. Cl$^4$ B01D 53/26, B65D 90/00

## II. FIELDS SEARCHED

| Minimum Documentation Searched [4] | |
|---|---|
| Classification System | Classification Symbols |
| IPC | B01D 53/26, B65D 90/00, F26B 21/08 |

| Documentation Searched other than Minimum Documentation to the Extent that such Documents are Included in the Fields Searched [5] |
|---|
| Jitsuyo Shinan Koho       1926 - 1984 <br> Kokai Jitsuyo Shinan Koho   1971 - 1984 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP, Y1, 47-21994 (Matsuhashi Sangyo Kabushiki Kaisha) 18 July 1972 (18. 07. 72) (Family nashi) | 1 - 4 |
| Y | JP, Y2, 57-27554 (Daikin Kogyo Co., Ltd.) 16 June 1982 (16. 06. 82) (Family nashi) | 1 - 4 |
| A | JP, B1, 34-4340 (Cargocare Engineering Corp.) 29 May 1959 (29. 05. 59) (Family nashi) | 1 - 4 |
| A | JP, Y1, 42-8800 (Matsushita Seiko Kabushiki Kaisha) 10 May 1967 (10. 05. 67) (Family nashi) | 1 - 4 |
| A | JP, A, 50-47251 (Handa Toyoko) 26 April 1975 (26. 04. 75) (Family nashi) | 1 - 4 |

* Special categories of cited documents: [15]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search [2] | Date of Mailing of this International Search Report [2] |
|---|---|
| January 11, 1985    (11. 01. 85) | January 21, 1985    (21. 01. 85) |
| International Searching Authority [1] | Signature of Authorized Officer [20] |
| Japanese Patent Office | |

Form PCT/ISA/210 (second sheet) (October 1981)